# EUROPÄISCHE PATENTSCHRIFT

(11) **EP 1 171 725 B1**
(45) Veröffentlichungstag und Bekanntmachung des Hinweises auf die Patenterteilung: **29.10.2003**
(21) Anmeldenummer: 00934904.4
(22) Anmeldetag: 13.04.2000
(51) Int. Cl.: F16G 13/16, B65H 75/02, H02G 11/02, B66C 13/12, B65H 49/38

(54) **TRANSPORTVORRICHTUNG**
TRANSPORTING DEVICE
DISPOSITIF DE TRANSPORT

(30) Priorität: 19.04.1999 DE 29907445 U
(43) Veröffentlichungstag der Anmeldung: 16.01.2002
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Lippert, Stachow, Schmidt & Partner
(86) Internationale Anmeldenummer: DE0001147
(87) Internationale Veröffentlichungsnummer: WO00063585

(56) Entgegenhaltungen:
- EP-A- 0 699 616
- EP-A- 0 791 552
- DE-A- 19 536 722
- DE-C- 538 468
- DE-C- 4 119 211
- DE-C- 4 426 598
- US-A- 3 837 590
- US-A- 5 113 976
- US-A- 5 215 279
- US-A- 5 279 469

## Beschreibung

Die Erfindung betrifft Transportvorrichtung, die im Wesentlichen die Gestalt einer Kabeltrommel aufweist, auf der eine mit Kabeln oder anderen Leitungen bestückte Energieführungskette aufgewickelt ist, mit einem im Wesentlichen um eine Rotationsachse der Transportvorrichtung angeordneten, vorzugsweise zylindrischen Zentralkörper und einem im Bereich der stirnseitigen Ende des Zentralkörpers angeordneten, sich radial von diesem erstreckenden Endbegrenzungselementen.

Eine derartige Transportvorrichtung ist beispielsweise aus der EP 0 699 616 bekannt.

Die zu transportierenden Ketten können bereits komplett konfektioniert mit Kabeln, Steckern, Endbefestigungsteilen und Zugentlastungen ausgestattet sein, so daß diese nur noch angeschlossen werden müssen. Derartige Energieführungsketten können eine erhebliche Länge und ein erhebliches Gewicht haben und sind dann im Handling schwierig. Insbesondere das Ablegen einer langen Kette in einer Führungsrinne am Boden oder an einem Kranauslegearm in etwa 10 bis 20 m Höhe ist bei groß ausgebildeten Energieführungsketten mit einer Breite von 10 bis 30 cm nur unter großen Umständen vorzunehmen, da eine solche Kette bis zu 100 m lang sein kann.

Der Erfindung liegt die Aufgabe zugrunde, das Handling und den Transport von Energieführungsketten zu vereinfachen.

Erfindungsgemäß wird dieses dadurch gelöst, dass Mittel vorgesehen sind zur Unterteilung des Raumes zwischen den Endbegrenzungselementen in mindestens einem ersten Abschnitt, in dem aus einem Ende der Energieführungskette herausragenden Leitungen aufgewickelt sind, und einem zweiten Abschnitt, in dem die eigentliche Energieführungskette aufgewickelt ist.

Der Zentralkörper ist vorzugsweise als kreiszylindrischer Hohlkörper ausgebildet, um ein einfaches Aufwickeln zu gewährleisten und das Auftreten eines Polygoneffektes weitestgehend zu verhindern. Die Systemkette ist in dem Zwischenraum zwischen den beiden Endbegrenzungselementen durch Rotation des Zentralkörpers aufwickelbar. Der Zwischenraum zwischen den Endbegrenzungselementen kann je nach Bedarf breiter oder schmaler ausgestaltet sein. Die Innenbreite der Trommel kann z.B. etwa der Kettenbreite entsprechen, was zu einer radialen Aufwicklung, aber gleichzeitig einer Trommel von geringen Längsabmaßen führt. Diese Version wird als radiale Ausführungsform bezeichnet. Alternativ kann die Innenbreite der Trommel ein Vielfaches der Kettenbreite betragen. Bei dieser Ausgestaltung kann die Aufwicklung in einer Lage oder mehreren Lagen erfolgen. Dieses führt im Vergleich zur ersten Ausführungsform zu einer breiteren Trommel, die aber dafür geringe radiale Ausmessungen aufweist. Diese zweite Version wird im folgenden als axiale Ausführungsform bezeichnet.

Es liegt auch im Rahmen der Erfindung, daß die Endbegrenzungselemente verschiebbar auf dem Zentralkörper angeordnet sind, um die Transportvorrichtung entsprechend den Bedürfnissen für unterschiedlich breite Kettensysteme bzw. Ketten verwenden zu können.

Der Zentralkörper muß nicht notwendigerweise ein geschlossener Körper sein, sondern kann auch aus mehreren nebeneinander angeordneten Stangen oder Stegen bestehen.

Die Endbegrenzungselemente sind vorzugsweise als kreisförmige Endscheiben ausgebildet, da dieses ein besonders einfaches Abrollen der Kettensysteme von der Transportvorrichtung ermöglicht. Die Transportvorrichtung kann zum Aufwickeln und Abwickeln der Systemkette dann einfach gerollt werden. Zum Verbessern des Handlings der Transportvorrichtung sind an der in Einbaulage äußeren Seite der Endscheiben Handgriffe vorgesehen, mit Hilfe derer Benutzer die Transportvorrichtung abund aufrollen können.

Es kommt häufig vor, daß derartige Systemketten aus den Enden der eigentlichen Energieführungskette herausragende Leitungen aufweisen. Auch diese Leitungen müssen auf die Transportvorrichtung aufgewickelt werden. Dabei ist zu beachten, daß insbesondere zu Beginn des Aufwickelns keine scharfen Übergänge entstehen, die zu einem Abknicken der herausragenden Leitungen und zu deren Beschädigung führen würden. Aus diesem Grund sind in dem Zwischenraum zwischen den Endbegrenzungselementen bzw. Endscheiben die Unterteilungsmittel angeordnet. Durch diese Unterteilungsmittel wird sichergestellt, daß die Energieführungskette und die Enden in definierten Bereichen aufgewickelt werden können, die durch die Unterteilungsmittel gebildet werden.

Es existieren grundsätzlich zwei unterschiedliche Möglichkeiten der Unterteilung. Zum einen die axiale Ausführung, wobei die Unterteilung durch kreisförmige Unterteilungsscheiben erfolgt, zwischen denen Verbindungsstreben aufgespannt sind. Die Unterteilungsscheiben oder Streben erstrecken sich radial von dem Zentralkörper weg, um den zwischen den Endscheiben vorgesehenen Raum in - von der Seite her gesehen - scheibenförmige Abschnitte aufzuteilen, in denen die Kabel und Energieführungskette definiert aufgewickelt werden können.

Alternativ zu den Unterteilungsscheiben können an dem Zentralkörper befestigte Streben vorgesehen sein, die sich radial von dem Zentralkörper erstrecken. Zwischen diesen Streben und/oder den Endscheiben werden dann Verbindungsstreben angeordnet, die in Einbaulage vorzugsweise kolinear zur Rotationsachse der Transportvorrichtung verlaufen. Auf diese Verbindungsstreben können Energieführungsketten oder Kabel aufgewickelt werden. Die Verbindungsstreben sind an den Radialstreben versetzbar befestigt, um die Transportvorrichtung je nach Einsatzzweck umgestalten zu können.

Bei der radialen Ausführungsform wird die Energieführungskette oder das Kabel zunächst auf den Zentralkörper aufgewickelt. Zur Bildung eines zweiten Abschnitts werden zwischen den Radialstreben Verbindungsstreben bzw. Verbindungselemente eingesetzt, die wiederum im wesentlichen kolinear zur Rotationsachse der Transportvorrichtung verlaufen. Die weitere Aufwicklung der Energieführungskette erfolgt auf den Verbindungsstreben. Bei der radialen Ausführungsform werden also radial voneinander beabstandete Abschnitte beim Aufwickeln der Energieführungskette durch Einsetzen der Verbindungsstreben erzeugt. Je nach Wunsch können durch Einsetzen weiterer Verbindungsstreben radial beabstandet weitere Abschnitte ausgebildet werden.

Um eine genaue Fixierung der Energieführungskette und einer Beschädigung der Endbefestigungsteile zu verhindern, ist es vorteilhaft, eine Befestigungsvorrichtung für die Energieführungskette oder das Endbefestigungsteil an der Transportvorrichtung vorzusehen. Üblicherweise ist diese Befestigungsvorrichtung an den Zentralkörper oder den seitlichen Endbegrenzungselementen angeordnet.

Die Transportvorrichtung kann mit einer Achse versehen sein, die koaxial zur Rotationsachse durch den Zentralkörper verläuft. Die Achse kann sowohl fest eingesetzt als auch lösbar einsetzbar ausgebildet sein. An den seitlich aus der Transportvorrichtung herausragenden Enden der Achse kann die Transportvorrichtung für den Transport angehoben werden. Dieses erfolgt beispielsweise durch die Achse umschließende Ketten, welche durch einen Kran angehoben werden. Um eine Drehung der Transportvorrichtung beim Anheben zu verhindern, sind zwischen den Ketten oder dem Seil auf die Achse aufsetzbare Bremsen angeordnet.

Die Achse muß nicht als durchgehende Achse ausgebildet sein. Es ist auch möglich, zylindrische Stäbe aus Vollmaterial auf der Außenseite der Endscheiben zu befestigen.

Die Erfindung ist in der Zeichnung anhand eines bevorzugten Ausführungsbeispiels veranschaulicht. Es zeigen:
- Figur 1:: eine Frontansicht einer axialen Ausführungsform der erfindungsgemäßen Transportvorrichtung mit aufgewickelter Energieführungskette,
- Figur 2:: eine Seitenansicht entlang der Linie II-II gemäß Figur 1,
- Figur 3:: eine Stirnansicht entlang des Pfeils III gemäß Figur 1 ohne Ständer,
- Figur 4:: eine alternative Variante der axialen Ausführungsform der Transportvorrichtung und
- Figur 5:: eine Variante der radialen Ausführungsform der erfindungsgemäßen Transportvorrichtung.

Die Transportvorrichtung ist in ihrer Gesamtheit mit 1 bezeichnet und die Energieführungskette mit 2.

Die Transportvorrichtung 1 hat die Gestalt einer sehr groß dimensionierten Kabeltrommel mit einem koaxial zur Rotationsachse der Transportvorrichtung angeordneten, zylindrischen Zentralkörper 3, auf den die Energieführungskette 2, zumindest teilweise, aufwickelbar ist.

Im Bereich der stirnseitigen Enden des Zentralkörpers 3 sind kreisrunde Endscheiben 4 und 5 angeordnet. Zur Unterteilung des Raumes zwischen den Endscheiben in drei Abschnitte sind in Längsrichtung von den Endscheiben beabstandete Radialstreben 6, 7, 8, 9 an dem Zentralkörper 3 befestigt. Zwischen den Radialstreben 6, 7, 8, 9 sind Verbindungsstreben befestigt, welche auch die Radialstreben 6, 7, 8, 9 voneinander beabstanden und stabilisieren. Die Radialstreben 6, 7, 8, 9 und die Verbindungsstreben 10, 11 sind vorliegend als C-Profile aus Stahl gefertigt. Die Verbindungsstreben 10, 11 sind axial entlang der Längsachse der Radialstreben 6, 7, 8, 9 verschiebbar und können in jeder beliebigen Position an diesen fixiert werden. Auch die Radialstreben können in axialer Richtung an beliebigen Stellen auf dem Zentralkörper angeordnet sein.

Durch die zentrale Rotationsachse der Transportvorrichtung verläuft eine in ihrer Gesamtheit mit 12 bezeichnete Achse, die drehfest mit den Endscheiben 4 und 5 verbunden ist. Die freien Enden der Achse 12 sitzen in Ruhelage auf Ständern 13 und 14 auf.

Die Transportvorrichtung ist auf einer erfindungsgemäßen Fixiervorrichtung angeordnet, die in ihrer Gesamtheit mit 15 bezeichnet ist.

Für das Auf- und Abwickeln werden Ketten oder Seile an den freien Enden der Achse 12 befestigt und die gesamte Transportvorrichtung wird mit einem Kran über die Ketten angehoben. Beim Anheben wird die Transportvorrichtung 1 von der Fixiervorrichtung abgehoben, so daß sich die Transportvorrichtung 1 frei drehen kann. Die Energieführungskette 2 wird nun auf die Transportvorrichtung aufgewickelt. Um ein Beschädigen der Energieführungskette 2 zu verhindern, wird diese definiert in den drei Abschnitten zwischen den Endscheiben 4 und 5 aufgewickelt. Zunächst werden die freien Enden der Kabel 23 der Energieführungskette 2 in den mit I gekennzeichneten Abschnitt aufgerollt. Kurz vor Beginn der eigentlichen Energieführungskette 2 werden die Kabel durch den Abschnitt II in den Abschnitt III umgelenkt. Das Aufwickeln der eigentlichen Glieder der Energieführungskette 2 erfolgt in Abschnitt III. Durch den Übergang der Kabel von dem Abschnitt I in den Abschnitt III wird verhindert, daß die Kabel abrupt abgeknickt und beschädigt werden.

Nachdem die Glieder der Energieführungskette 2 auf die Transportvorrichtung 1 aufgewickelt worden sind, werden die am anderen Ende der Energieführungskette gelegenen freien Kabel auf die Verbindungssstreben 10, 11 in dem Abschnitt II aufgewickelt. Durch die Verbindungsstreben 10 und 11 müssen die Kabelenden nicht wieder ganz bis auf den Zentralkörper heruntergeführt werden und werden im Bereich des radialen Außenrandes an leicht zugänglicher Stelle aufgewickelt.

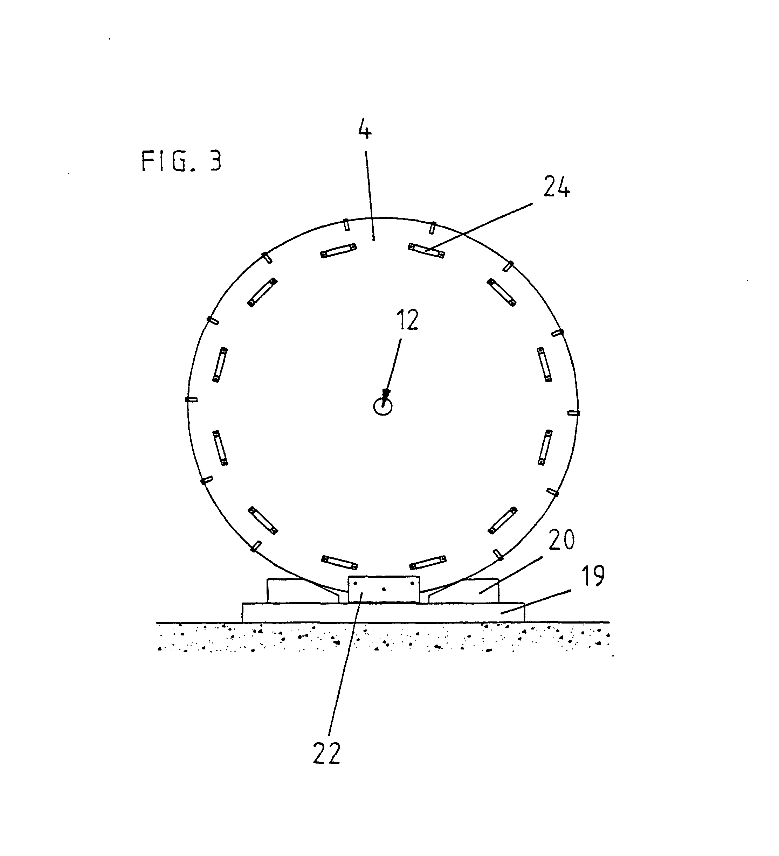

Außenseitig an den Endscheiben 4 und 5 sind Griffe für ein leichteres Handling vorgesehen. Diese Griffe sind insbesondere aus Figur 3 zu entnehmen.

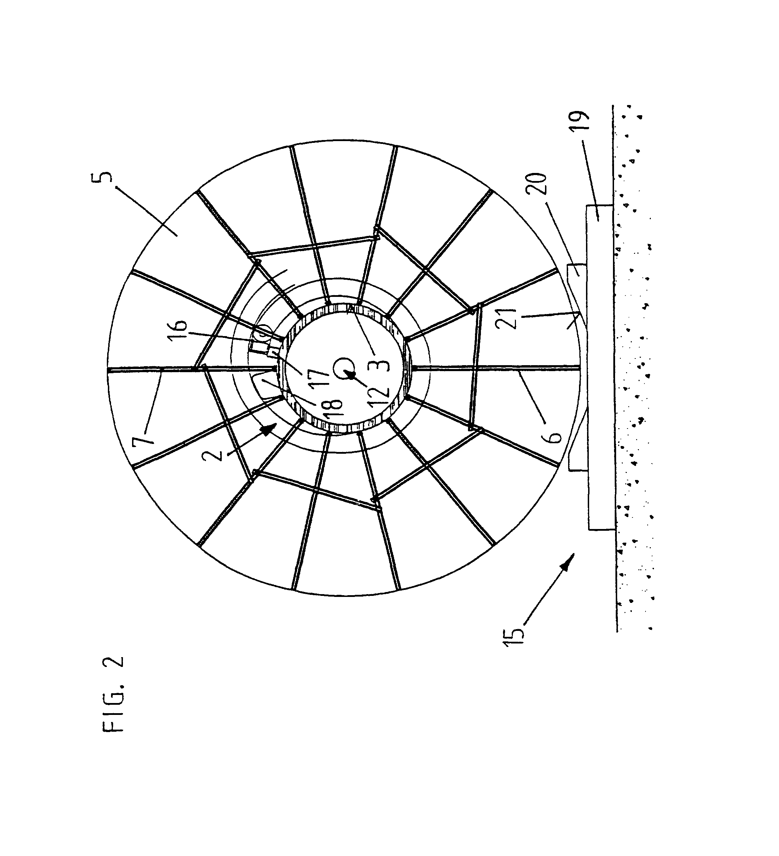

Der genauere Aufbau der Radialstreben 6, 7 ist aus der Figur 2 ersichtlich. Aus dieser Figur ist auch zu entnehmen, daß neben den beschriebenen Radialstreben 6, 7 entlang der gesamten äußeren Mantelfläche des Zentralkörpers 3 radial abstehende Radialstreben angeordnet sind. Zwischen jeweils 2 in Blickrichtung der Figur 2 übereinander liegenden Radialstreben sind die kolinear zur Achse 12 verlaufenden Verbindungsstreben 10 und 11 angeordnet, um eine ausreichende Stabilität der Transportvorrichtung 1 zu gewährleisten.

Zur besseren Fixierung der Endbefestigungsteile 16 von Energieführungsketten ist an dem Zentralkörper 3 eine Befestigungsvorrichtung 15 vorgesehen. Diese Befestigungsvorrichtung besteht vorliegend aus einem Klotz, den das Endbefestigungsteil 16 hintergreift.

In geringem Abstand vor dem Endbefestigungsteil 16 bzw. der Befestigungsvorrichtung ist ein weiterer Klotz 18 drehfest mit dem Zentralkörper 3 verbunden. Dieser Klotz 18 verhindert das Abknicken der Energieführungskette 2 beim Aufwickeln und verhindert zudem die starke Beanspruchung des Endbefestigungsteiles 16 durch die auflaufende Energieführungskette 2.

Die Fixiervorrichtung 15 zum Verhindern des Rollens oder einer Rotation der Transportvorrichtung 1 besteht im wesentlichen aus einem auf einen Untergrund aufsetzbaren Sockel, auf dem ein Balken 20 mit einer bogenförmigen Ausnehmung 21 befestigt ist. Der Radius der bogenförmigen Ausnehmung entspricht im wesentlichen dem Außenradius der Endscheibe 5. Wenn die Transportvorrichtung 1 in die Ausnehmung 21 des Sockels 19 eingesetzt ist, verhindert die Fixiervorrichtung 15 eine Rotation der Transportvorrichtung 1. Eine noch bessere Fixierung wird erreicht, wenn die Endscheiben 5 und 6 mit dem Sockel 19 über einen Flansch 22 verbunden werden.

Die erfindungsgemäße Transportvorrichtung ermöglicht es erstmalig, auch schwere Energieführungsketten einfach zu verlegen. Zu diesem Zweck wird die Transportvorrichtung über einer Führungsrinne abgerollt, welche die Energieführungskette aufnehmen soll.

Durch Anheben der Transportvorrichtung mit einem Kran können die auf der Transportvorrichtung aufgewickelten Energieführungsketten einfach an einem Kranausleger in größeren Höhen befestigt werden. Durch die Befestigung mit dem Flansch kann die Fixiervorrichtung 15 zusammen mit der Transportvorrichtung von dem Kran angehoben werden.

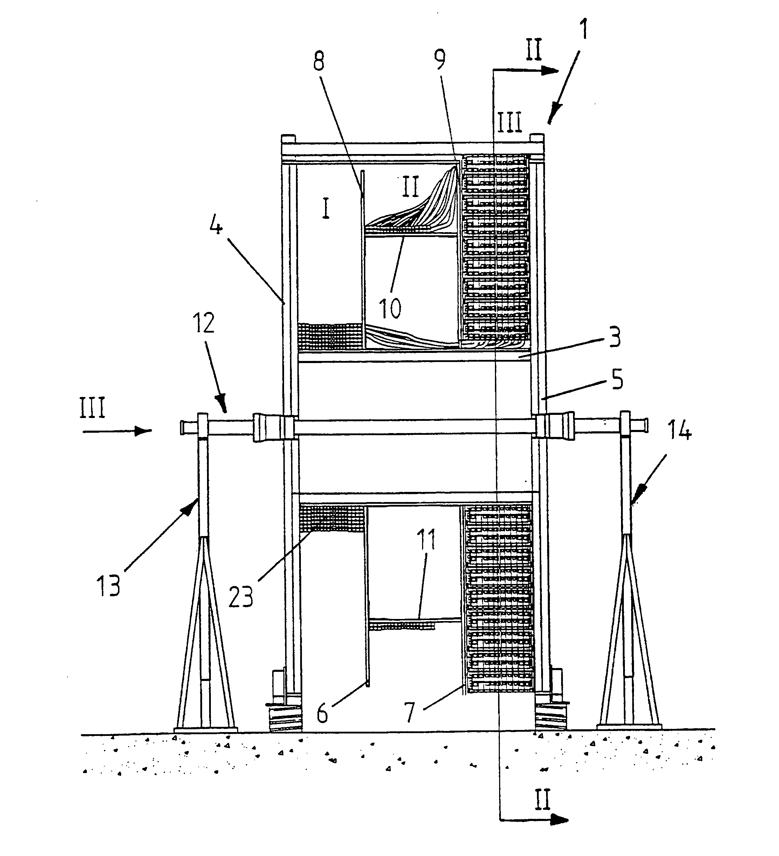

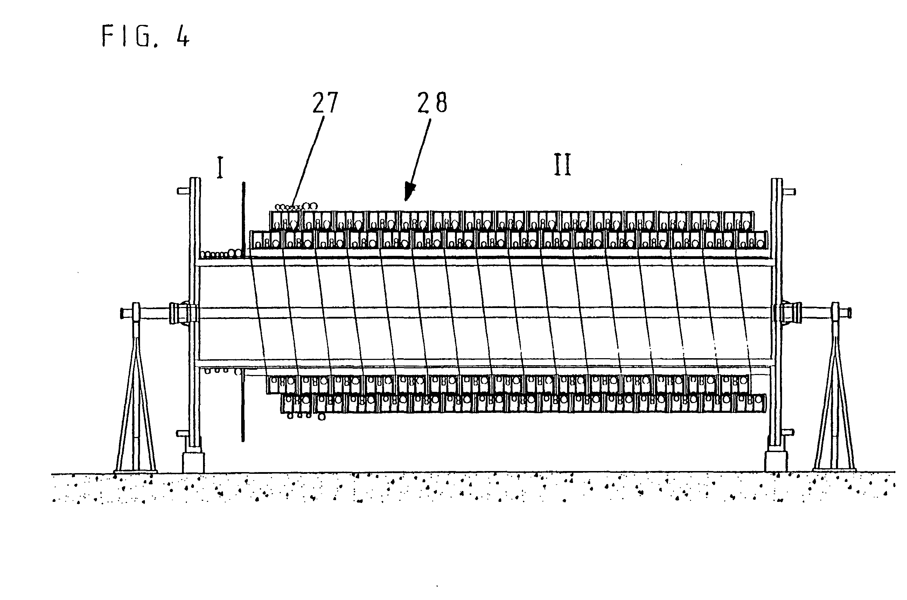

In Figur 4 ist eine axiale Ausführungsform der erfindungsgemäßen Transportvorrichtung in der Frontansicht dargestellt. Diese Ausführungsform ist axial länger als die in Figur 1 dargestellte, dafür weist sie aber in radialer Richtung geringere Ausmaße auf. Das freie Ende der Kabel 25 wird zunächst auf den Abschnitt I der Transportvorrichtung 26 aufgewickelt. Die eigentliche Energieführungskette wird auf den Abschnitt II in alternierenden Lagen aufgewickelt. Das Ende der Kabel 27 wird auf die äußere Lage der Energieführungskette 28 aufgewikkelt.

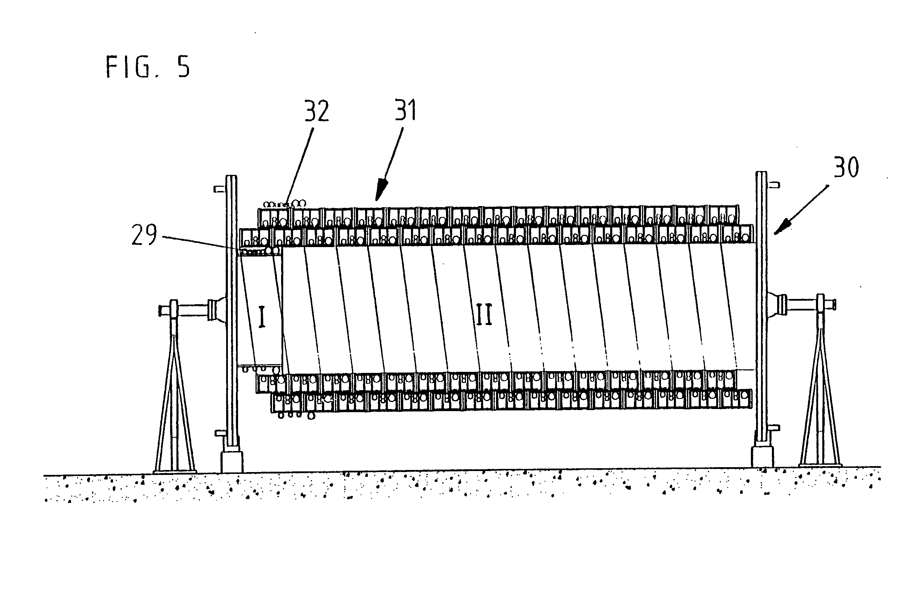

Figur 5 stellt schließlich eine radiale Ausführungsform der erfindungsgemäßen Transportvorrichtung in der Frontansicht dar. Das freie Ende der Kabel 29 wird zunächst auf einen Zentralkörper mit geringerem umfänglichen Ausmaß als der Hauptzentralkörper aufgewickelt. Die Energieführungskette 31 wird auf den den Abschnitt II bildenden Hauptzentralkörper in Lagen aufgewickelt. Damit ist der Abschnitt II radial beabstandet von der Rotationsachse vom der Abschnitt I. Das Ende der Kabel 32 ist wiederum auf die äußere Lage der Energieführungskette 31 aufgewickelt.

Je nach Anwendungsfall sind verschiedene Ausführungsformen der axialen und radialen Transportvorrichtung gestaltbar. Kombinationen der beiden Varianten sind ebenfalls möglich.

Für den Transport und die Lagerung wird die Transportvorrichtung zunächst auf den Ständern 13, 14 abgesetzt. Unter die Umfangsränder der Endscheiben 4, 5 wird dann der Sockel der erfindungsgemäßen Fixiervorrichtung geschoben. Zur Arretierung der Transportvorrichtung können dann Klötze auf den Sockel aufgesetzt werden, welche die Funktion des Balkens 20 mit der bogenförmigen Ausnehmung erfüllen. Es kommt demnach wesentlich darauf an, daß die Fixiervorrichtung Mittel aufweist, um die Rotation der Transportvorrichtung zu verhindern. Schließlich werden ein oder mehrere Flansche 22 zwischen dem Sockel und den Endscheiben 4, 5 befestigt. Die Transportvorrichtung kann nun von den Ständern 14, 15 abgehoben und komplett mit der Fixiervorrichtung versetzt werden. Dieses kann beispielsweise auf einen Tieflader für den Transport erfolgen. Die Ständer 14, 15 müssen für den Transport nicht mitgeführt werden.

### Transportvorrichtung

### Bezugszeichenliste

- 1: Transportvorrichtung
- 2: Energieführungskette
- 3: Zentralkörper
- 4: Endscheibe
- 5: Endscheibe
- 6, 7, 8, 9: Radialstrebe
- 10, 11: Verbindungsstrebe
- 12: Achse
- 13, 14: Ständer
- 15: Fixiervorrichtung
- 16: Endbefestigungsteile
- 17: Klotz
- 18: Klotz
- 19: Sockel
- 20: Balken
- 21: Ausnehmung
- 22: Flansch
- 23: Kabel
- 24: Griff
- 25: Kabel
- 26: Transportvorrichtung
- 27: Kabel
- 28: Energieführungskette
- 29: Kabel
- 30: Transportvorrichtung
- 31: Energieführungskette
- 32: Kabel

## Patentansprüche

1. Transportvorrichtung (1; 26; 30), die im Wesentlichen die Gestalt einer Kabeltrommel aufweist, auf der eine mit Kabeln oder anderen Leitungen bestückte Energieführungskette (2) aufgewickelt ist, mit einem im Wesentlichen um eine Rotationsachse der Transportvorrichtung angeordneten, vorzugsweise zylindrischen Zentralkörper (3), im Bereich der stirnseitigen Ende des Zentralkörpers angeordneten, sich radial von diesem erstreckenden Endbegrenzungselementen und Mitteln zur Unterteilung des Raums zwischen den Endbegrenzungselementen in mindestens einem ersten Abschnitt, in dem die aus einem Ende der Energieführungskette (2) herausragenden Leitungen (25; 29) aufgewickelt sind, und einen zweiten Abschnitt, in dem die eigentliche Energieführungskette (28; 31) aufgewickelt ist.

2. Transportvorrichtung (1; 26; 30) nach Anspruch 1, **dadurch gekennzeichnet, dass** die Endbegrenzungselemente als kreisförmige Endscheiben (4, 5) ausgebildet sind.

3. Transportvorrichtung (1) nach Anspruch 1 oder 2, **dadurch gekennzeichnet, dass** die Mittel zur Unterteilung sich radial von dem Zentralkörper (3) erstreckende Radialstege (6, 7, 8, 9) aufweisen, von denen jeweils mindestens zwei paarweise fluchtend auf dem Zentralkörper (3) angeordnet sind, und zwischen den fluchtenden Radialstegen (8, 9 bzw. 6, 7) Verbindungsstege (10 bzw. 11) angeordnet sind, die im Wesentlichen kolinear zur Rotationsachse verlaufen und auf denen die aus einem Ende der Energieführungskette (2) herausragenden Leitungen oder die eigentliche Energieführungskette aufgewickelt sind.

4. Transportvorrichtung (1) nach Anspruch 3, **dadurch gekennzeichnet, dass** durch die Radialstege (6, 7, 8, 9) der Raum zwischen den Endbegrenzungselementen in drei Abschnitte (I, II, III) unterteilt ist, wobei die aus einem Ende der Energieführungskette herausragenden Leitungen (23) in dem an ein Endbegrenzungselement angrenzenden Abschnitt (I) aufgerollt sind, die eigentliche Energieführungskette in dem an das andere Endbegrenzungselement angrenzenden Abschnitt (III) aufgewickelt ist, so dass die Kabel durch den dazwischenliegenden Abschnitt (II) verlaufen, und die aus dem anderen Ende der Energieführungskette (2) herausragenden Kabel auf den zwischen den Radialstegen (6, 7, 8, 9) angeordneten Verbindungsstegen (10, 11) in dem dazwischenliegenden Abschnitt (II) aufgewickelt sind.

5. Transportvorrichtung (26) nach Anspruch 1 oder 2, **dadurch gekennzeichnet, dass** die Mittel zur Unterteilung des Raums zwischen den Endbegrenzungselementen zwei axial getrennte Abschnitte (I, II) bilden, wobei im ersten Abschnitt (I) die aus einem Ende der Energieführungskette herausragenden Leitungen (25) und im anderen Abschnitt (II) die eigentliche Energieführungskette (28) aufgewikkelt sind und die aus dem anderen Ende der Energieführungskette herausragenden Leitungen (27) auf die äußere Lage der Energieführungskette (28) aufgewickelt sind.

6. Transportvorrichtung (30) nach Anspruch 1 oder 2, **dadurch gekennzeichnet, dass** der Zentralkörper aus einem Abschnitt (I) mit geringerem umfänglichen Ausmaß und einem Abschnitt (II) mit größerem umfänglichen Ausmaß besteht, wobei die aus einem Ende der Energieführungskette herausragenden Leitungen auf den Abschnitt (I) mit geringem umfänglichen Ausmaß und die Energieführungskette (31) auf den Abschnitt (II) mit größerem umfänglichen Ausmaß aufgewickelt sind und die aus dem anderen Ende der Energieführungskette herausragenden Leitungen (32) auf die äußere Lage der Energieführungskette (31) aufgewickelt sind.

7. Transportvorrichtung (1; 26; 30) nach einem der Ansprüche 1-6, **dadurch gekennzeichnet, dass** an dem Zentralkörper (3) oder den Endbegrenzungselementen eine Befestigungsvorrichtung (17) für ein, vorzugsweise mit einem Endbefestigungsteil (16) versehenen Ende der Energieführungskette (2) vorgesehen ist.

8. Transportvorrichtung (1; 26; 30) nach einem der Ansprüche 1-7, **gekennzeichnet durch** eine Achse (12), die koaxial zur Rotationsachse **durch** den Zentralkörper (3) verläuft.

## Claims

1. Transport device (1, 26, 30) essentially having the form of a cable drum that is wound up with an energy guiding chain (2) fitted with cables or other lines with a preferably cylindrical central core (3) essentially mounted about a rotational axis of the transport device, with end elements located on the face ends of the central core and extending radially from it, and with means for dividing the space between the end elements into at least one first section in which the cables (25, 29) protruding from an end of the energy guiding chain (2) are wound up, and into a second section in which the energy guiding chain as such (28, 31) is wound up.

2. Transport device (1, 26, 30) as per Claim 1, **characterised in that** the end elements are designed as circular end disks (4,5).

3. Transport device (1, 26, 30) as per Claim 1 or 2, **characterised in that** the means for dividing comprise radial struts (6, 7, 8, 9) extending radially away from the central core (3), of which at least two are mounted on the central core (3) in line with one another as a pair, and that between aligned radial struts (8, 9 and/or 6, 7) connecting struts (10 and/or 11) are mounted, which are essentially colinear to the rotational axis and on which the lines protruding from an end of the energy guiding chain or the energy guiding chain as such (2) are wound up.

4. Transport device (1) as per Claim 3, **characterised in that** the space between the end elements is divided into three sections (I, II, III) by the radial struts (6, 7, 8, 9), wherein the cables protruding from an end of the energy guiding chain are rolled up in a section (I) bordering on one end element, the energy guiding chain as such is wound up in a section (III) bordering on the other end element, the cables running through the intermediate section (II), and the cables protruding from the other end of the energy guiding chain (2) are wound up on the connecting struts (10, 11) mounted between the radial struts (6, 7, 8, 9) in the intermediate section (II).

5. Transport device (26) as per Claim 1 or 2, **characterised in that** the means for dividing the space between the end elements form two axially separated sections (I, II), wherein the cables (25) protruding from one end of the energy guiding chain (2) are wound up in the first section (I), the energy guiding chain as such (28) is wound up in the other section (II) and wherein the cables (27) protruding from the other end of the energy guiding chain (2) are wound up on the outer layer of the energy guiding chain (28).

6. Transport device (30) as per Claim 1 or 2, **characterised in that** the central core includes a section (I) with a smaller circumference and another section (II) with a bigger circumference, wherein the cables protruding from one end of the energy guiding chain are wound up in the section (I) with the smaller circumference, the energy guiding chain (31) is wound up in the section (II) with the bigger circumference, and the cables (32) protruding from the other end of the energy guiding chain are wound up on the outer layer of the energy guiding chain (31).

7. Transport device (1, 26, 30) as per one of Claims 1 to 6, **characterised in that** a fastening device (17) for an end of the energy guiding chain (2), preferably equipped with an end mounting element (16), is provided on the central core (3) or the end elements.

8. Transport device (1, 26, 30) as per one of Claims 1 to 7, **characterised by** a shaft (12) running coaxially to the rotational axis through the central core (3).

## Revendications

1. Dispositif de transport (1 ; 26 ; 30) qui présente essentiellement la forme d'un tambour de câble sur lequel est enroulée une chaîne transport d'énergie (2) équipée de câbles et d'autres lignes électriques, ayant un corps central (3) de préférence cylindrique disposé essentiellement autour d'un axe de rotation du dispositif de transport, des éléments de délimitation d'extrémité disposés au niveau de l'extrémité avant du corps central, s'étendant radialement du corps central et des moyens de subdivision de l'espace entre les éléments de délimitation d'extrémité en au moins une première section dans laquelle les lignes électriques (25 ; 29) faisant saillie d'une extrémité de la chaîne de transport d'énergie (2) sont enroulées, et une seconde section dans laquelle la chaîne transport d'énergie (28 ; 31) particulière est enroulée.

2. Dispositif de transport (1 ; 26 ; 30) selon la revendication 1, **caractérisé en ce que** les éléments de délimitation d'extrémité sont réalisés en tant que flasques (4, 5) circulaires.

3. Dispositif de transport (1) selon la revendication 1 ou 2, **caractérisé en ce que** les moyens de subdivision comportent des entretoises radiales (6, 7, 8, 9) s'étendant radialement du corps central (3), dont chaque fois au moins deux sont disposées alignées par paire sur le corps central (3), et **en ce que** des entretoises de fixation (10 ou 11) sont disposées entre les entretoises radiales ( 8, 9 ou 6, 7), lesquelles sont sensiblement colinéaires par rapport à l'axe de rotation et sur lesquelles sont enroulées les lignes électriques faisant saillie d'une extrémité de la chaîne transport d'énergie (2) ou de la chaîne transport d'énergie particulière.

4. Dispositif de transport (1) selon la revendication 3, **caractérisé en ce que** l'espace entre les éléments de délimitation d'extrémité est subdivisé en trois sections (I, II, III) par les entretoises radiales, moyennant quoi, les lignes (23) faisant saillie d'une extrémité de la chaîne transport d'énergie sont enroulées dans la section (I) adjacente à un élément de délimitation d'extrémité, la chaîne transport d'énergie particulière est enroulée dans la section (III) adjacente à l'autre élément de délimitation d'extrémité, de telle sorte que les câbles s'étendent à travers la section (II) qui se trouve entre les deux, et les câbles faisant saillie de l'autre extrémité de la chaîne transport d'énergie (2) sont enroulés sur les entretoises de fixation (10, 11) disposées sur les entretoises radiales (6, 7, 8, 9) dans la section (III) qui se trouve entre les deux.

5. Dispositif de transport (26) selon la revendication 1 ou 2, **caractérisé en ce que** les moyens de subdivision de l'espace entre les éléments de délimitation d'extrémité forment deux sections (I, II) séparées axialement, moyennant quoi, dans la première section (I) les lignes électriques (25) faisant saillie d'une extrémité de la chaîne transport d'énergie (25) et dans l'autre section (II) les lignes électriques particulières (28) sont enroulées et les lignes transport d'énergie (27) faisant saillie de l'autre extrémité de la chaîne transport d'énergie sont enroulées sur la couche extérieure de la chaîne transport d'énergie (28).

6. Dispositif de transport (30) selon la revendication 1 ou 2, **caractérisé en ce que** le corps central se compose d'une section (I) ayant des dimensions d'étendue plus petites et d'une section (II) ayant des dimensions d'étendue plus grandes, moyennant quoi, les lignes électriques faisant saillie d'une extrémité de la chaîne transport d'énergie sont enroulées sur la section (I) ayant des dimensions d'étendue réduites et la chaîne transport d'énergie (31) est enroulée sur la section (II) ayant des dimensions d'étendue plus grandes et les lignes électriques (32) faisant saillie de l'autre extrémité de la chaîne transport d'énergie sont enroulées sur la couche extérieure de la chaîne transport d'énergie (31).

7. Dispositif de transport (1 ; 26 ; 30) selon l'une quelconque des revendications 1-6, **caractérisé en ce que** sur le corps central (3) ou sur les éléments de délimitation d'extrémité est prévu un dispositif de fixation (17) pour une, de préférence, avec une extrémité de la chaîne transport d'énergie (2) équipée d'un élément de fixation d'extrémité (16).

8. Dispositif de transport (1 ; 26 ; 30) selon l'une quelconque des revendications 1-7, **caractérisé par** un axe (12) qui s'étend de manière coaxiale par rapport à l'axe de rotation à travers le corps central (3).
